# EUROPÄISCHE PATENTSCHRIFT

(11) **EP 0 825 065 B1**
(45) Veröffentlichungstag und Bekanntmachung des Hinweises auf die Patenterteilung: **02.01.2003**
(21) Anmeldenummer: 97110995.4
(22) Anmeldetag: 02.07.1997
(51) Int. Cl.: B60R 11/02, H04M 1/02

(54) **Befestigung für eine Abdeckung**
Cover attachment
Fixation d'un couvercle

(30) Priorität: 08.08.1996 DE 19631941
(43) Veröffentlichungstag der Anmeldung: 25.02.1998
(73) Patentinhaber: Dr.Ing.h.c. F. Porsche Aktiengesellschaft, 70435 Stuttgart (DE)
(72) Erfinder: Netzker, Ralph-Maria, 71636 Ludwigsburg (DE); Höbel, Peter, 75242 Neuhausen (DE); Gocht, Helmut, 71297 Mönsheim (DE); Gutschner, Andreas, 71706 Markgröningen (DE)

(56) Entgegenhaltungen:
- EP-A- 0 685 954
- DE-A- 3 420 586
- DE-U- 9 419 679
- PATENT ABSTRACTS OF JAPAN vol. 014, no. 187 (E-0917), 16. April 1990 (1990-04-16) & JP 02 036647 A (TAMURA ELECTRIC WORKS LTD;OTHERS: 01), 6. Februar 1990 (1990-02-06)

## Beschreibung

Die Erfindung betrifft eine Abdeckung für ein Wählhebelgehäuse, gemäß dem Oberbegriff des Auspruchs 1.

Bei Abdeckungen besteht stets das Problem diese paßgenau an einem Gehäuse zu befestigen. Insbesondere bei Gehäusen von Wählhebeln, jedoch auch bei anderen Gehäusen, bei denen Bedienungselemente durch die Abdeckung hindurchtreten, tritt zusätzlich das Problem auf, daß der Wählhebel bzw. das Bedienungselement mit möglichst engen Toleranzen in den hierfür vorgesehenen Öffnungen der Abdeckung laufen soll.

Es ist Aufgabe der Erfindung, eine Abdeckung für ein Wählhebelgehäuse zu schaffen, die einfach zu montieren und paßgeman an einem Wählhebelgehäuse zu befestigen ist.

Diese Aufgabe wird erfindungsgemaß mit den Merkmalen des Patentanspruches 1 gelöst. Nach einer vorteilhaften Weiterbildung der Erfindung ist es darüberhinaus vorgesehen, Befestigungsmittel wie Schrauben etc. für die Abdeckung im Bereich der beiden Lagerpunkte anzuordnen. Hierdurch wird die exakte Positionierung der Abdeckung weiter verbessert, da die Kräfte der Befestigungsmittel nun direkt auf die Lagerpunkte wirken.

Besonders beim zylindrischen Lagerpunkt ist es ferner möglich, das Befestigungsmittel in der Zylinderachse einzusetzen. Dies vereinfacht die Herstellung einer entsprechenden Abdeckung, da mit einer einzigen gestuften Bohrung in der Abdeckung sowohl die Aufnahme für den Lagerpunkt, als auch die Durchtrittsöffnung für das Befestigungsmittel geschaffen wird.

Bei dem zweiten keilförmigen Lagerpunkt hat es sich als vorteilhaft erwiesen, die Keilachse parallel zur Hauptlängenerstreckung der Öffnung der Abdeckung anzuordnen, so daß Längentoleranzen der Abdeckung aufgenommen werden können ohne daß die Positionierung des Wählhebels bzw. des Bedienelementes zur Öffnung verändert wird.

Darüber hinaus ist es möglich, daß sich eine Abdeckung, die wie vor beschrieben in den beiden Lagerpunkten gehalten ist, über weitere Baugruppen, z.B. weitere Gehäuse, erstreckt. Für derartige Abdeckungen war es bisher bekannt, die Abdeckung gemittelt in bezug auf die Position zweier Gehäuse zu positionieren, an denen sie auch gehalten war. Mit der vorgeschlagenen Ausbildung ist es demgegenüber möglich, die Abdeckung in bezug auf ein einziges Gehäuse zu positionieren und so sicherzustellen, daß beispielsweise ein aus diesem Gehäuse herausragendes Bedienelement mit geringen Toleranzen durch eine in der Abdeckung vorgesehene Öffnung geführt sein kann.

Wird in diesem Zusammenhang darüber hinaus die Abdeckung an den weiteren Baugruppen bzw. Gehäusen mittels schwimmend gelagerter Befestigungselemente gehalten, so ist ferner sichergestellt, daß auch bei Lagetoleranzen zwischen den einzelnen Baugruppen bzw. Gehäusen keine Verspannungen innerhalb der Abdeckung auftreten können.

Die Erfindung ist nachstehend anhand den in den Figuren dargestellten Ausführungsbeispiele näher erläutert. Es zeigen:
- Fig. 1: zu einem ersten Ausführungsbeispiel eine Draufsicht auf ein Wählhebelgehäuse mit zwei Lagerpunkten,
- Fig. 2: einen Schnitt durch eine Abdeckung des Wählhebelgehäuses nach der Linie II-II der Fig. 1 und

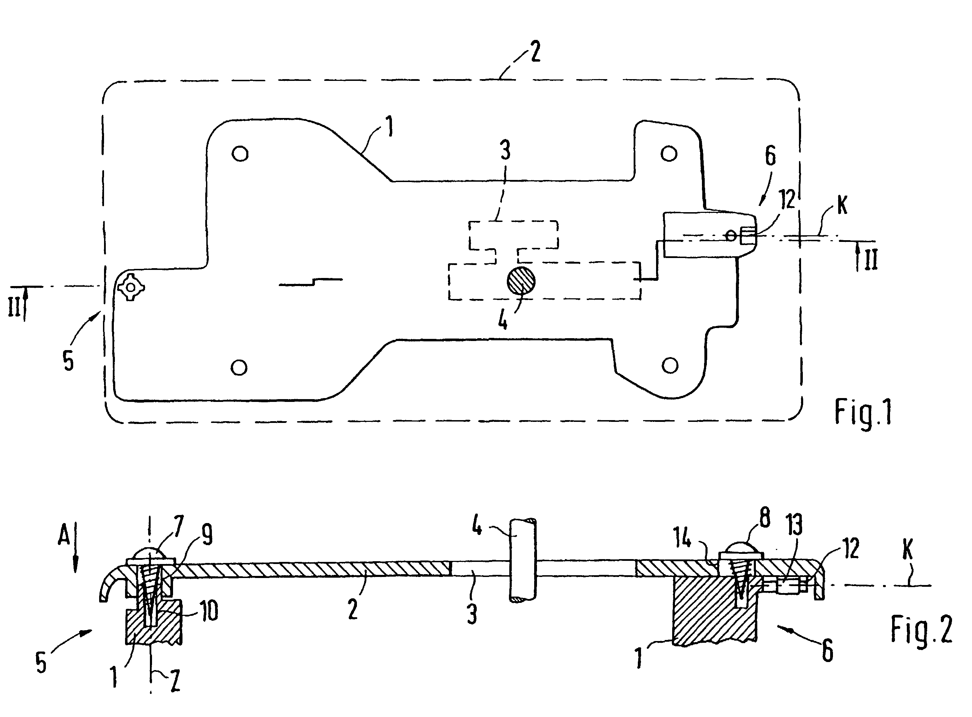

Das in Fig. 1 in einem ersten Ausführungsbeispiel dargestellte Wählhebelgehäuse 1 ist mit einer gestrichelt dargestellten Abdeckung 2 versehen, in der eine H-förmige Öffnung 3 zum Durchtritt eines Wählhebels 4 vorgesehen ist.

Die Abdeckung 2 ist mittels einer aus einem ersten Lagerpunkt 5 und einem zweiten Lagerpunkt 6 bestehende Befestigung am Wählhebelgehäuse 1 gehalten und durch als Befestigungsmittel, hier Schrauben 7, 8, befestigt.

Der erste Lagerpunkt 5 ist zylindrisch ausgebildet. Die Zylinderachse Z verläuft dabei parallel zu einer Aufsetzrichtung A der Abdeckung 2 auf das Wählhebelgehäuse 1. Zur Aufnahme des zylindrischen Lagerpunktes 5 ist in der Abdeckung 2 eine Bohrung 9 vorgesehen, durch die auch die Schraube 7 hindurchtritt. Die Schraube 7 greift dabei in eine Bohrung 10 ein, die konzentrisch innerhalb des ersten Lagerpunktes 5 angeordnet ist.

Der zweite Lagerpunkt 6 besteht aus einer zur Aufsetzrichtung A geöffneten keilförmigen Aufnahme 12 sowie einem hiermit korrespondierenden, ebenfalls keilförmig ausgebildeten Vorsprung 13 der Abdeckung 2. Eine Keilachse K der Aufnahme 12 liegt in einer Ebene senkrecht zur Aufsetzrichtung A und verläuft dicht am ersten Lagerpunkt 5 vorbei parallel zur Hauptlängenerstreckung der Öffnung 3, die hier durch die langen Schenkel der H-förmigen Öffnung 3 gegeben ist. Im dargestellten Beispiel ist die keilförmige Aufnahme 12 nach unten hin offen; dies ist jedoch nicht zwingend erforderlich, sondern es ist lediglich darauf zu achten, daß der Vorsprung 13 in den Seitenflächen der Aufnahme 12 zur Anlage gelangt und nicht auf einer etwaig vorhandenen Grundfläche der Aufnahme 12 aufsitzt. Da die Aufnahme 12 keine derartige Grundfläche besitzt, ist die zweite Schraube 8 neben der Aufnahme 12 und damit auch neben dem Vorsprung 13 angeordnet. Der Vorsprung 13 ist innerhalb der Aufnahme 12 entlang der Keilachse K beweglich, so daß innerhalb der Abdeckung 2 für die Schraube 8 ein Langloch 14 vorgesehen ist, das so dimensioniert ist, daß es die Längentoleranzen der Abdeckung 2 in bezug auf die Lage der Schraube 8 ausgleichen kann.

Der erste zylindrische Lagerpunkt stellt sicher, daß die Abdeckung 2 an diesem Punkt bezüglich des Wählhebelgehäuses 1 genau positioniert ist. Die Winkelposition der Abdeckung 2 gegenüber dem Wählhebelgehäuse 1 wird allein durch den zweiten zylindrischen Lagerpunkt 6 eingestellt, da die Schraube 7 konzentrisch zum ersten Lagerpunkt 5 angeordnet ist und so bezüglich der Winkelposition der Abdeckung ohne Wirkung ist. Da die Abdeckung 2 und das Wählhebelgehäuse 1 vor dem Festziehen der Befestigungsschrauben 7, 8 noch nicht miteinander verbunden sind, kann beim Auflegen der Abdeckung 2 auf das Wählhebelgehäuse 1 der Vorsprung 13 der Abdeckung 2 in der keilförmigen Aufnahme 12 verschoben werden und so Toleranzen in Längsrichtung der Abdeckung 2 ausgleichen. Besonders vorteilhaft ist hierbei, daß die Keilachse K parallel zur Hauptlängenerstreckung der Ausnehmung 3 verläuft, weil sich nun Längentoleranzen in der Abdeckung 2 oder im Wählhebelgehäuse 1 nicht auf die Führung des Wählhebels 4 in der Öffnung 3 auswirken können.

## Patentansprüche

1. Abdeckung (2) für ein Wählhebelgehäuse (1), welche an zwei Lagerpunkten (5, 6) an dem Wählhebelgehäuse (1) gehalten und durch Befestigungsmittel (7,8) an dem Wählhebelgehäuse (1) befestigt ist, wobei der erste Lagerpunkt (5) zylindrisch ausgebildet ist und die Zylinderachse (Z) des ersten Lagerpunktes (5) parallel zu einer Aufsetzrichtung (A) der Abdeckung (2) liegt und wobei der zweite Lagerpunkt (6) keilförmig ausgebildet ist, **dadurch gekennzeichnet, daß** die Keilachse (K) des zweiten keilförmig ausgebildeten Lagerpunktes (6) senkrecht zur Aufsetzrichtung der Abdeckung (2) und parallel zur Hauptlängenerstreckung einer in der Abdeckung (2) vorgesehenen Durchtrittsöffnung (3) für einen Wählhebel (4) angeordnet ist.

2. Abdeckung nach Anspruch 1, **dadurch gekennzeichnet, daß** die Befestigungsmittel (7, 8) der Abdeckung am Gehäuse im Bereich der Lagerpunkte (5, 6) vorgesehen sind.

## Claims

1. A cover (2) for a selector-lever housing (1), the cover (2) being held at two bearing points (5, 6) on the selector-lever housing (1) and being fastened to the selector-lever housing (1) by fastening means (7, 8), wherein the first bearing point (5) is made cylindrical and the cylinder axis (**Z**) of the first bearing point (5) is orientated parallel to a positioning direction (**A**) of the cover (2), and wherein the second bearing point (6) is made wedge-shaped, **characterized in that** the wedge axis (**K**) of the second wedge-shaped bearing point (6) is arranged at a right angle to the positioning direction of the cover (2) and parallel to the main linear extension of a through-opening (3) provided in the cover (2) for a selector lever (4).

2. A cover according to Claim 1, **characterized in that** the fastening means (7, 8) of the cover are provided on the housing in the region of the bearing points (5, 6).

## Revendications

1. Couvercle (2) pour un boîtier (1) d'un levier de sélection, qui est maintenu en deux points de palier (5, 6) sur le boîtier (1) du levier de sélection, et est fixé au boîtier (1) du levier de sélection par des moyens de fixation (7, 8), le premier point de palier (5) étant cylindrique et l'axe de cylindre (Z) du premier point de palier (5) étant parallèle à une direction de mise en place (A) du couvercle (2), et le deuxième point de palier (6) étant en forme de coin, **caractérisé en ce que** l'axe de coin (K) du deuxième point de palier (6) réalisé en forme de coin est perpendiculaire à la direction de mise en place du couvercle (2) et parallèle à l'étendue longitudinale principale d'une ouverture de passage (3) d'un levier de sélection (4), prévue dans le couvercle (2).

2. Couvercle selon la revendication 1, **caractérisé en ce que** les moyens de fixation (7, 8) du couvercle sont prévus sur le boîtier dans la zone des points de palier (5, 6).
